# EUROPEAN PATENT APPLICATION

(11) **EP 2 910 327 A1**
(43) Date of publication of application: **26.08.2015**
(21) Application number: 13849853.0
(22) Date of filing: 25.09.2013
(51) Int. Cl.: B23D 61/04, B27B 33/08

(54) **SAW BLADE**

(30) Priority: 22.10.2012 JP 2012232828
(71) Applicant: Kanefusa Kabushiki Kaisha, Niwa-gun, Aichi 480-0192 (JP); Nishio, Satoru, Niwa-gun, Aichi 480-0192 (JP)
(72) Inventor: NISHIO Satoru, Niwa-gun Aichi 480-0192 (JP)
(74) Representative: Baumgärtel, Gunnar
(86) International application number: PCT/JP2013/075878
(87) International publication number: WO 2014/065069

(57) **Abstract**

A tipped saw blade (10) has a base metal (12) and a plurality of tips (14) attached on an outer periphery of the base metal (12). The plurality of tips (14) include long tips (30) having a setting line length in a radial direction of 4 mm or more, and short tips (40) having a setting line length in the radial direction of less than 4 mm. A number of the long tips (30) is 2 to 15% of sum total of numbers of the long tips (30) and short tips (40), and is two or more.

## Description

### Technical Field

The present invention relates to a tipped saw blade for cutting or grooving workpiece such as wood, wood board, resin, ceramic type material, metal, and a composite material consisting of some of these materials.

### Background Art

A tipped saw blade has a base metal and a plurality of tips mounted on the outer periphery of the base metal. The tips are formed of cemented carbide, polycrystalline diamond, CBN, cermet, ceramic, or a material coated with these materials. The tips are mounted on the base metal so as to exhibit a face bevel angle and a tangential clearance angle suitable for the workpiece. The tipped saw blade is mounted to a machining apparatus and is rotated thereon to cut the workpiece. The undulation amount of the cut surface of the workpiece is determined by various factors. Examples of the factors include various angles such as the radial clearance angle, the deflection of the tips during machining, and the rigidity of the base metal. Japanese Patent No. 3170498 discloses a tip endowed with a special side surface configuration helping to diminish the surface roughness of the cut surface of the workpiece.

The tipped saw blade is mounted to a flange of the machining apparatus. When the machining apparatus causes the tipped saw blade to make axial rotation, a flange contact surface contacting with the tipped saw blade or the rotation shaft may be deflected. Due to the deflection, the undulation amount of the cut surface of the workpiece may be enlarged. In particular, in machining apparatuses used in the developing countries, etc., the deflection of the rotation shaft or the flange contact surface causes the tip side surfaces to be greatly deflected substantially at a rate of one time per rotation.

### Disclosure of the Invention

### Problem to be solved by the Invention

Thus, there has been a need for a tipped saw blade capable of diminishing the undulation amount of the cut surface of the workpiece when the rotation shaft, etc. are deflected.

### Means for solving the Problem

According to an aspect of the present invention, a tipped saw blade has a base metal and a plurality of tips attached on an outer periphery of the base metal. The plurality of tips include long tips having a setting line length in a radial direction of 4 mm or more, and short tips having a setting line length in the radial direction of less than 4 mm. A number of the long tips is 2 to 15% of sum total of numbers of the long and short tips, and is two or more.

The tipped saw blade is mounted to a rotation shaft of a machining apparatus and to a flange attached on the rotation shaft. When the flange contact surface that contacts the tipped saw blade or the rotation shaft is deflected, the side surface of the tipped saw blade is deflected. After careful study, it has been found out that, in such a case also, the above tipped saw blade helps to sufficiently diminish the undulation amount of the cut surface of the workpiece. Further, the tipped saw blade can be formed at low cost. The tips are formed of an expensive material such as cemented carbide or polycrystalline diamond. Thus, as compared with the short tips, the long tips are much more expensive. The number of the long tips, however, is as small as 2 to 15% of the sum total of the number of tips, so that it is possible to form the tipped saw blade at low cost.

After careful study, it has been found out that when the rotation shaft is deflected in the case where all the tips are short tips, the undulation amount of the cut surface of the workpiece is large. It has also been found out that when the rotation shaft is deflected in the case where all the tips are long tips, the undulation amount of the cut surface of the workpiece is small. And, it has also been found out that when the number of the long tips is 2 to 15% of all the tips, it is possible to achieve an effect in terms of the undulation amount of the cut surface of the workpiece akin to that when all the tips are long tips. That is, it has been found out that, by setting the number of the long tips to only 2 to 15% of the number of all the tips, it is possible to achieve such a remarkable effect as could not have been expected by those skilled in the art. Thus, the above tipped saw blade can sufficiently diminish the undulation amount of the cut surface of the workpiece, and yet can be formed at low cost.

### Brief Description of Drawings

FIG. 1 is a front view of a tipped saw blade of the present invention;
FIG. 2 is an enlarged front view of a portion of II in FIG. 1;
FIG. 3 is a cross-sectional view taken along line III-III in FIG. 1;
FIG. 4 is an enlarged cross-sectional view of a portion of IV in FIG. 3;
FIG. 5 is a cross-sectional view taken along line V-V in FIG. 1;
FIG. 6 is an enlarged cross-sectional view of a portion of VI in FIG. 5;
FIG. 7 is a schematic view for illustrating a machining of a workpiece by the tipped saw blade of the present invention;
FIG. 8 is a schematic view for showing a relationship between a deflection width of a side surface of a tip end and an undulation of a cut surface at a portion of VIII in FIG. 7;
FIG. 9 is a view for showing a relationship between feed rate of the workpiece and the undulation of the cut surface when the workpiece is machined by a tipped saw blade having a long tip that has a radial clearance angle of 1° and each setting length;
FIG. 10 is a view for showing a relationship between feed rate of the workpiece and the undulation of the cut surface when the workpiece is machined by a tipped saw blade having a long tip that has a radial clearance angle of 0.5° and each setting length;
FIG. 11 is a view for showing a relationship between the amplitude of the side surface of the tip end and the undulation of the cut surface;
FIG. 12 illustrates a modified example of FIG. 4;
FIG. 13 illustrates a modified example of FIG. 6;
FIG. 14 is an enlarged cross-sectional view of a portion near a first short tip of another modified example;
FIG. 15 is an enlarged cross-sectional view of a portion near a second short tip of another modified example; and
FIG. 16 is an enlarged cross-sectional view of a portion near a long tip of another modified example.

### Embodiments for carrying out the Invention

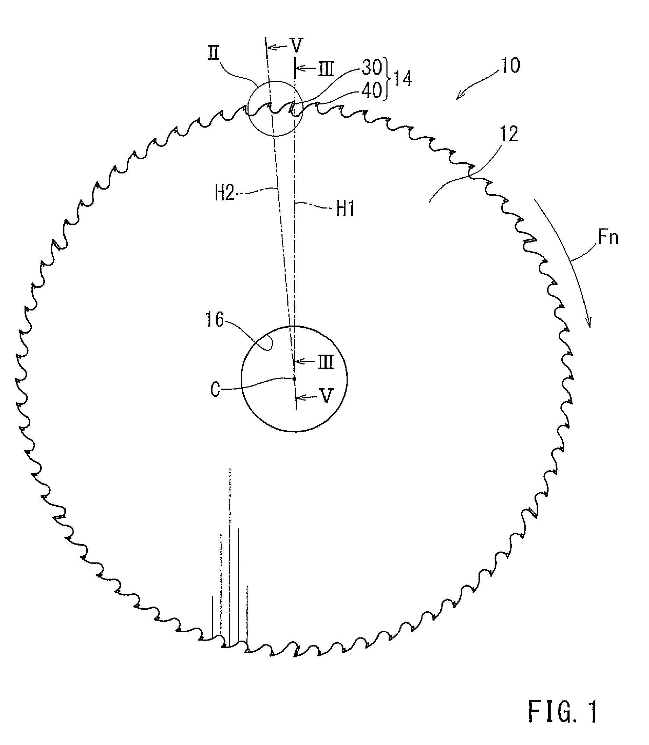

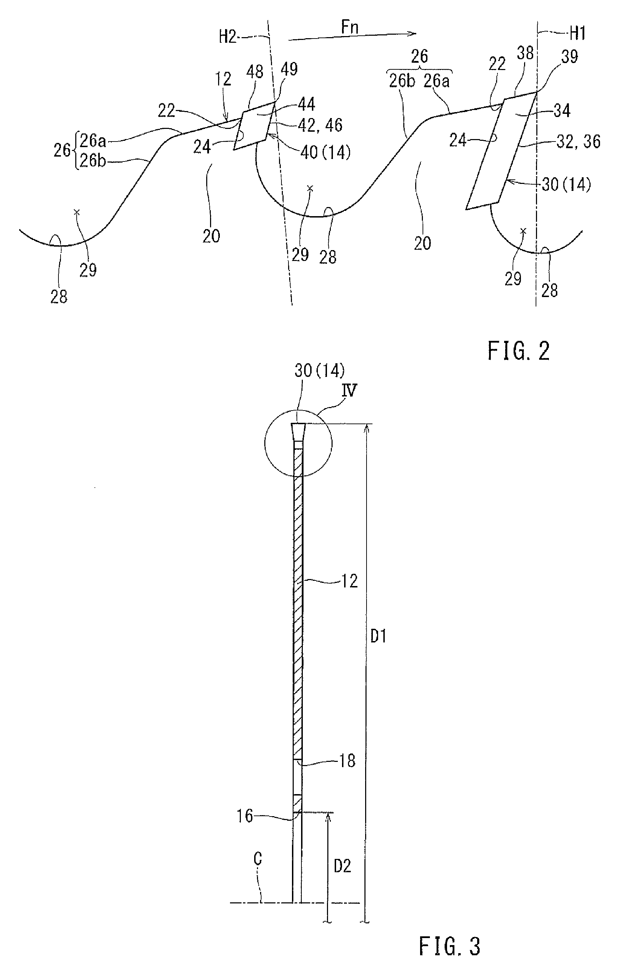

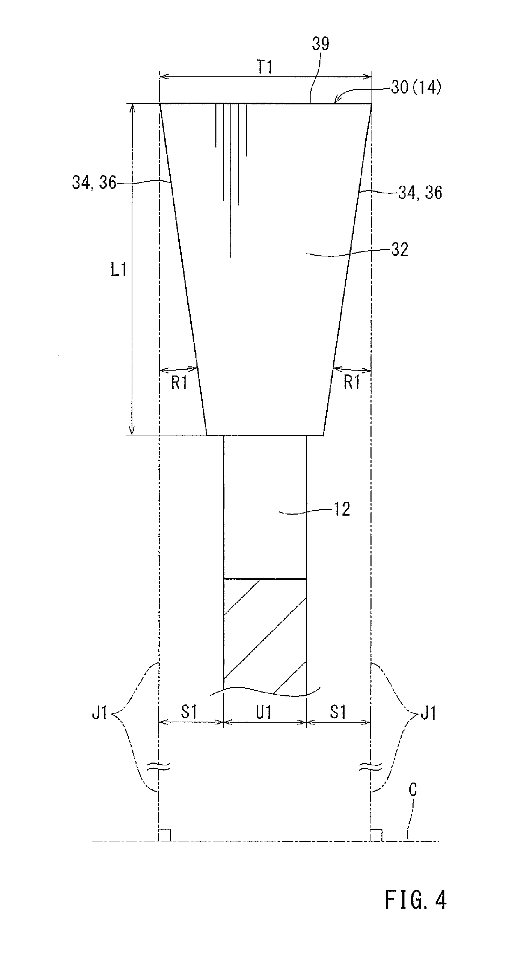

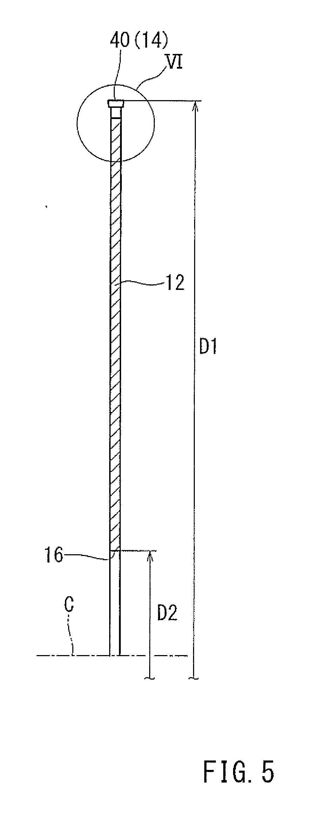

An embodiment of the present invention will be described with reference to FIGS. 1 through 11. As shown in FIGS. 1 and 2, a tipped saw blade 10 is of a disc-like configuration similar to such as a circular saw blade or a side milling cutter. The tipped saw blade 10 has a base metal (saw blade main body) 12 and a plurality of tips 14 attached on the outer periphery of the base metal 12. The base metal 12 is of a disc-like configuration. A circular fit-engagement hole 16, that extends through the base metal 12 in the axial direction, is formed at the center of the base metal 12. As shown in FIGS. 3 and 4, the thickness U1 of the base metal 12 is determined taking deflection rigidity into consideration. In the case where the outer diameter D1 of the base metal 12 is 400 mm, the base metal thickness U1 is 2.5 to 8 mm, for example, 3.2 mm.

As shown in FIG. 2, the tipped saw blade 10 has a plurality of tooth mounting portions 20 in the outer periphery of the base metal 12. The plurality of tooth mounting portions 20 are arranged, for example, at equal center angle intervals. The tooth mounting portions 20 protrude in the radial direction from the base metal 12, and are substantially chevron-shaped. Each tooth mounting portion 20 has an apex portion 22 at the outermost position in the radial direction. Each apex portion 22 is situated at the forward end in the rotational direction Fn of the outer peripheral edge of the tooth mounting portion 20.

As shown in FIG. 2, each tooth mounting portion 20 has a tooth mounting surface 24 and an outer peripheral inclined surface 26. The tooth mounting surface 24 extends radially inwards from the apex portion 22, and is situated on the front side in the rotational direction Fn as compared with the outer peripheral inclined surface 26. The outer peripheral inclined surface 26 extends from the apex portion 22 in a direction opposite the rotational direction Fn to form the outer peripheral edge of the tooth mounting portion 20. Each outer peripheral inclined surface 26 has a first outer peripheral inclined surface 26a and a second outer peripheral inclined surface 26b. The first outer peripheral inclined surface 26a extends radially inwards from the apex portion 22 in the direction opposite the rotational direction Fn. The second outer peripheral inclined surface 26b extends radially inwards from the first outer peripheral inclined surface 26a at an inclination angle larger than that of the first outer peripheral inclined surface 26a.

As shown in FIG. 2, an arcuate surface 28 is formed between the second outer peripheral inclined surface 26b and the tooth mounting surface 24. Each arcuate surface 28 is recessed radially inwards between tooth mounting portions 20 to form a gallet 29. Between the arcuate surface 28 and the tooth mounting surface 24, there is formed a step-like ledge on which the tip 14 can be seated. A slit (not shown) extending in the thickness direction may be formed in the base metal 12. A slit (not shown) extending radially inwards from the gallet 29 or some other slit may be formed in the base metal 12. First, the base metal 12 is cut out of a steel plate by laser or the like. Then, the tooth mounting surfaces 24, etc. are machined by a milling cutter or the like.

As shown in FIG. 2, a tip 14 is fixed to each tooth mounting surface 24 by a brazing material or the like. The tip 14 is of a rectangular configuration; and it is a hard tip formed of a hard material such as cemented carbide or cermet. Alternatively, the tip 14 is a high hardness tip formed of a high-hardness sintered body such as polycrystalline diamond. The tips 14 include long tips 30 the setting line of which is relatively long, and short tips 40 the setting line of which is relatively short.

As shown in FIGS. 2 and 4, each long tip 30 has a rake face 32, a side surface 34 and an outer peripheral flank face 38. The rake face 32 is directed in the rotational direction Fn, and is opposite the outer peripheral inclined surface 26. The side surface 34 is substantially orthogonal to the rake face 32, and is substantially parallel to the surface of the base metal 12. A side surface cutting edge 36 is formed at the position where the rake face 32 and the side surface 34 cross each other. The outer peripheral flank face 38 extends at an acute angle with respect to the rake face 32, and is directed outwards in the radial direction. An outer peripheral cutting edge 39 is formed at the position where the rake face 32 and the outer peripheral flank face 38 cross each other.

As shown in FIGS. 2 through 4, the forward end of each long tip 30 protrudes outwards in the radial direction from the base metal 12. The long tip 30 slightly protrudes in the thickness direction (axial direction) from the base metal 12. The tooth thickness T1 of the long tip 30 ranges from 2.6 to 10 mm. For example, when the outer diameter D1 is 400 mm, the tooth thickness T1 is 4.4 mm.

The short tips 40 are basically of the same construction as the long tips 30. As shown in FIGS. 2, 5, and 6, each short tip 40 has a rake face 42, a side surface 44, a side cutting edge 46, an outer peripheral flank face 48, and an outer peripheral cutting edge 49. The tooth thickness T2 of each short tip 40 is 2.6 to 10 mm; when, for example, the outer diameter D1 is 400 mm, it is 4.4 mm.

As shown in FIG. 4, each long tip 30 has a radial clearance angle R1, a setting amount S1, and a setting line length L1. The side surfaces 34 are inclined from both axial ends of the outer peripheral cutting edge 39 toward the thickness center. The radial clearance angle R1 is an angle made by the side surface 34 and the radial lines J1 in the thickness direction. In other words, the radial clearance angle R1 is the angle at which the side surfaces 34 extend radially inwards from both axial ends of the outer peripheral cutting edge 39. The radial lines J1 extend in the radial direction from the outer peripheral cutting edges 39 or the outer ends in the thickness direction of the rake face 32. In an imaginary plane H1, the radial lines J1 extend from the axial end edges of the outer peripheral cutting edge 39, and are orthogonal to the center axis C of the tipped saw blade 10. The imaginary plane H1 is a plane including the outer peripheral cutting edge 39 (the forward end on the outer side in the radial direction of the long tip 30) and the center axis C of the tipped saw blade 10.

The setting amount S1 is the distance as measured in the thickness direction between the outer end in the thickness direction of the outer peripheral cutting edge 39 or the rake face 32 and the surface of the base metal 12. The setting line length L1 is, for example, the radial length between the outer end in the radial direction of the rake face 32 and the inner end edge thereof. The setting line length L1 is the radial length of the side surface 34 as measured using the radial line J1 as the reference.

The setting line length L1 of the long tip 30 is 4 mm or more, and, more preferably, 4 to 12 mm. When the setting line length L1 of the long tip 30 is less than 4 mm, it is difficult to diminish the undulation amount of the cut surface of the workpiece W at the time of machining. When the setting line length L1 is 12 mm or more, it is difficult to form the tipped saw blade 10 at low cost. In view of the above, the setting line length L1 is most preferably 4 to 8 mm.

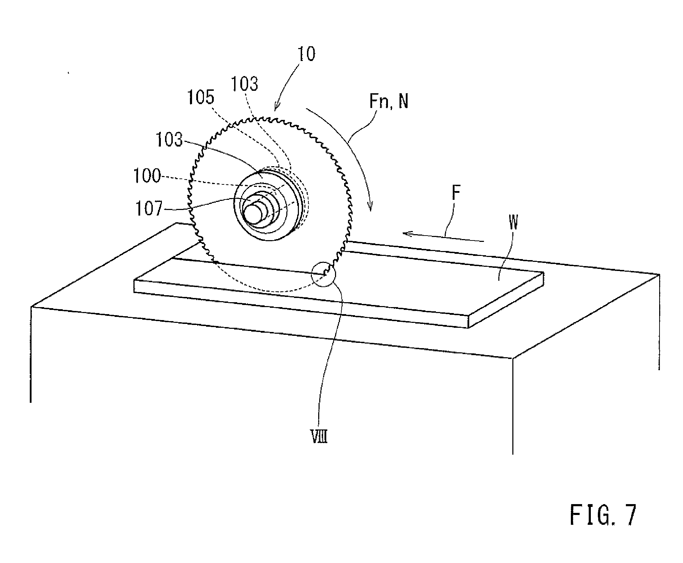

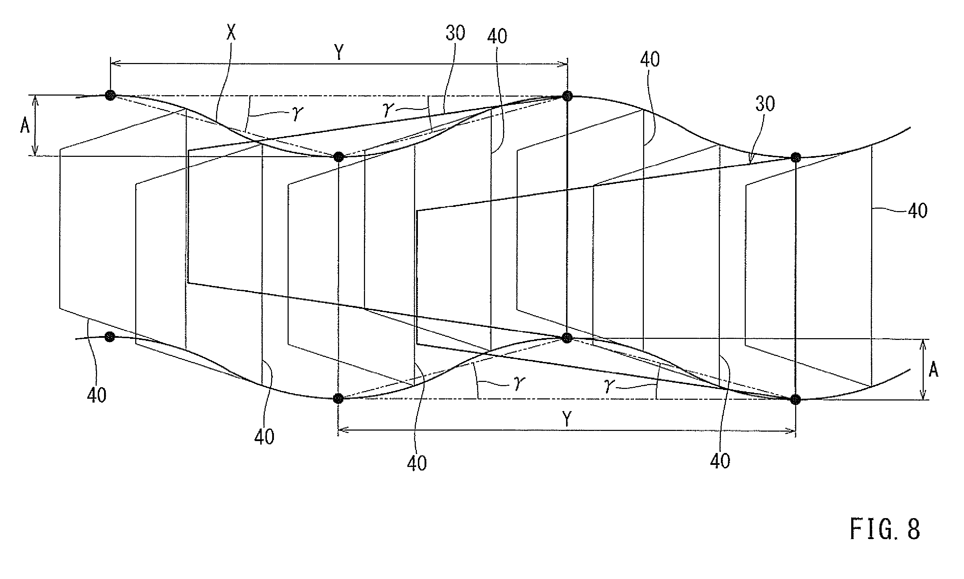

As shown in FIG. 4, the radial clearance angle R1 of the long tip 30 is 0° to 1.0°. When a rotation shaft 100 and a flange contact surface 105 shown in FIG. 7 are deflected, undulation X of the machined section shown in FIG. 8 is generated. When the radial clearance angle R1 of the long tip 30 is less than 0° (i.e., in the case of a negative radial clearance angle), there is a fear of the cutting resistance increasing due to the undulation X, or of the tip 14 being burned. When the radial clearance angle R1 of the long tip 30 is larger than 1.0°, the region where the undulation X and the side surface 34 are in contact with each other is reduced. As a result, there is a fear of its being impossible to diminish the undulation amount of the cut surface of the workpiece W. In view of the above, it is desirable for the radial clearance angle R1 of the long tip 30 to range from 0.2° to 0.8°, and, more preferably, from 0.3° to 0.7°. From the viewpoint of ease of production, it is desirable for the radial clearance angle R1 of the long tip 30 to be the same as the radial clearance angle R2 of the short tip 40.

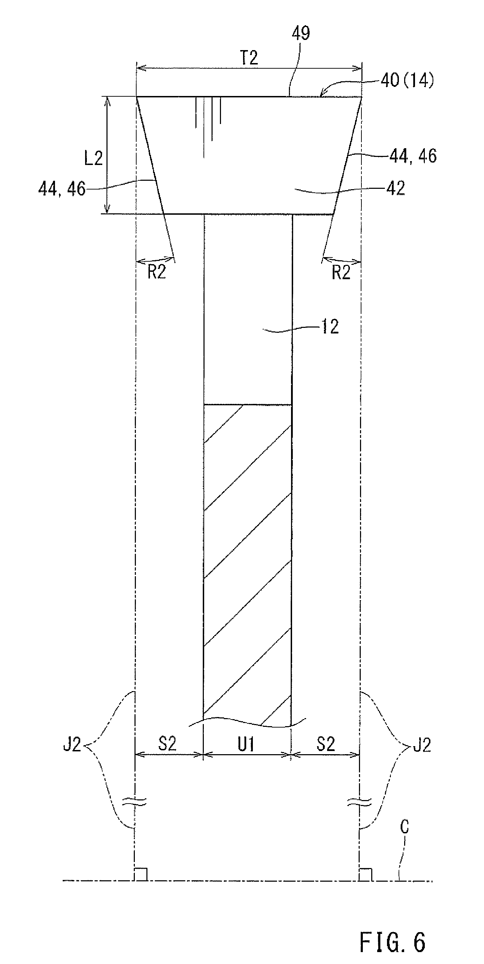

As shown in FIG. 6, the short tip 40 has the radial clearance angle R2, a setting amount S2 and a setting line length L2. The radial clearance angle R2 is an angle made by the side surface 44 and the radial line J2. The radial line J2, the radial clearance angle R2 and the setting line length L2 are to be defined in the same way as the radial line J1, the radial clearance angle R1, and the setting line length L1 of the long tip 30.

That is, the radial lines J2 extend in an imaginary plane H2 from the axial end edges of the outer peripheral cutting edge 49, and are orthogonal to the center axis C of the tipped saw blade 10. The imaginary plane H2 is a plane including the outer peripheral cutting edge 49 (the forward end of the short tip 40) and the center axis C of the tipped saw blade 10. The radial clearance angle R2 is the angle made by the side surface 44 and the radial line J2 in the thickness direction. In other words, the radial clearance angle R2 is the angle at which the side surfaces 44 are directed radially inwards from both axial ends of the outer peripheral cutting edge 49. The setting line length L2 is the radial length of the side surfaces 44 as measured using the radial lines J2 as the reference. The setting amount S2 is the distance between each surface of the base metal 12 and the radial line J2.

The length L2 of the setting line of the short tip 40 is less than 4 mm. More preferably, all the short tips 40 have a setting line length L2 of 1 to 2 mm. When the setting line length L2 of the short tip 40 is less than 1 mm, a markedly short service life will result due to the wear during machining. When the setting line length L2 is 2 mm or more, it is difficult to form the tipped saw blade 10 at low cost.

The radial clearance angle R2 of the short tips 40 ranges from 0° to 1.0°. When the radial clearance angle R2 of the short tip 40 is less than 0° (i.e., in the case of a negative radial clearance angle), there is a fear of the cutting resistance being increased due to the undulation X of the machined section shown in FIG. 8.

As shown in FIG. 1, the number of the long tips 30 is 2 to 15% of the sum total of the tips 14 (the long tips 30 and the short tips 40), and is two or more. When the number of the long tips 30 is less than 2% of the sum total of the tips, it is difficult to diminish the undulation amount of the cut surface of the workpiece W through the machining of the long tips 30. When the number of the long tips 30 is larger than 15% of the sum total of the tips, it is difficult to form the tipped saw blade 10 at low cost. For example, the tipped saw blade 10 has seventy two tips 14 in total, of which the number of the long tips 30 is six, and the number of the short tips 40 is sixty six.

The long tips 30 may be arranged at unequal center angle intervals. Preferably, the long tips 30 are arranged at equal center angle intervals. As a result, the undulation X of the machined section as shown in FIG. 8 due to the deflection of the rotation shaft 100 and the flange contact surface 105 shown in FIG. 7, is generated at equal intervals. Thus, it is possible to uniformly cut the cut surface of the workpiece W, and to uniformly diminish the undulation amount of the cut surface of the workpiece W.

As shown in FIG. 7, the machining apparatus has the rotation shaft 100 protruding horizontally from an electric motor (not shown). A flange 103 is attached to the rotation shaft 100 to sandwich the tipped saw blade 10. The flange 103 has a flange contact surface 105 in contact with the base metal 12 of the tipped saw blade 10. As shown in FIGS. 1 and 7, the rotation shaft 100 is inserted into the fit-engagement hole 16 of the base metal 12, and the tipped saw blade 10 is attached to the rotation shaft 100 by a fastening nut 107. The electric motor is operated to rotate the rotation shaft 100, and the tipped saw blade 10 is rotated in the rotational direction Fn at a predetermined RPM N. The workpiece W fed toward the tipped saw blade 10 at a predetermined feeding speed F, and the portion of the workpiece brought into contact with the tipped saw blade 10 is cut off.

The operation of the long tips 30 when the workpiece W is cut by using the tipped saw blade 10 will be described below. FIG. 8 schematically shows the tip side surface deflection width A and the undulation X. The tip side surface deflection width A is generated when the rotation shaft 100 and the flange contact surfaces 105 of the tipped saw blade 10 are deflected. The undulation X is generated when the workpiece W is cut, with there being the tip side surface deflection width A.

Suppose all tips of the saw 10 are short tips 40. While the tipped saw blade 10 makes one rotation, the outer peripheral cutting edges 49 of the short tips 40 form a wave-like path of the undulation X in the workpiece W. The short tips 40 cut the workpiece W along the route of the undulation X. The undulation X exhibits a height that is approximately the same as the tip side surface deflection width A. The undulation X is the undulation amount of the cut surface of the workpiece W. In addition to the short tips 40, the tipped saw blade 10 has the long tips 30. The long tips 30 exhibit a setting line length L1 that is longer than that of the short tips 40. Thus, while the tipped saw blade 10 makes one rotation, the long tips 30 perform cutting with flat undulation X. As a result, the undulation amount of the cut surface of the workpiece W is diminished.

As shown in FIGS. 7 and 8, the shape of the undulation X is influenced by three factors: the RPM N of the tipped saw blade 10, the feeding speed F of the workpiece W, and the tip side surface deflection width A. The undulation X approximates the path formed through cutting while the outer peripheral cutting edges 49 of the short tips 40 wave with respect to the workpiece W per rotation of the tipped saw blade 10.

The distance Y mm is the length of the undulation X per rotation of the tipped saw blade 10. The distance Y mm is related to the feeding speed F m/min and the RPM N. The distance Y mm can be approximated by the equation: Y = (F x 1000)/N. The maximum height of the undulation X is approximately the same as the tip side surface deflection width A. The undulation X is approximated by the triangle indicated by the imaginary line of FIG. 8; the base of the triangle corresponds to the distance Y, and the height thereof corresponds to the tip side surface deflection width A. The angle γ of the triangle can be approximated by the equation: γ = 2A/Y. By making the radial clearance angle R1 of the long tips 30 smaller with respect to the angle γ of the undulation X, it is possible to diminish the undulation amount of the cut surface of the workpiece W.

In view of the relationship between the angle γ of the undulation X and the radial clearance angle R1 of the long tips 30, it is desirable for the tipped saw blade 10 to be used in an RPM range of 1000 to 5000 rpm.

In view of the relationship between the angle γ of the undulation X and the radial clearance angle R1 of the log tips 30, the feeding speed F of the workpiece W ranges from 5 to 120 m/min. When the feeding speed F is less than 5 m/min, the undulation amount of the cut surface of the workpiece W is diminished, but the machining rate is reduced. When the feeding speed F is higher than 120 m/min, the undulation amount of the cut surface of the workpiece W is rather large. In view of the machining rate and the undulation amount of the cut surface of the workpiece W, it is desirable for the feeding speed F of the workpiece W to range from 20 to 80 m/min.

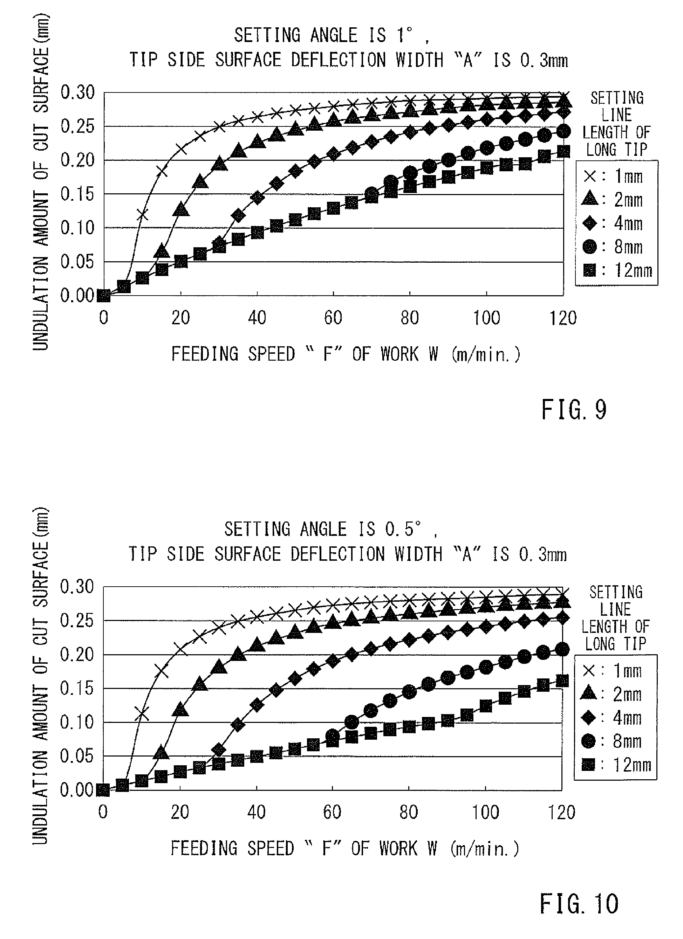

In the following, the relationship between the setting line length L1 of the long tips 30 and the undulation amount of the cut surface of the workpiece W will be described. By way of example, the relationship when the tip side surface deflection width A is 0.3 mm will be described. Tips, in which the radial clearance angle R2 is 1° and the setting line length L2 is 1 mm, are mounted as the short tips 40. Also at the positions where long tips 30 are to be mounted, the same tips as the short tips 40, in which the radial clearance angle R1 is 1° and the setting line length L1 is 1 mm, were mounted. And, the undulation amount of the cut surface of the workpiece W at each feeding speed F was measured. Next, at the positions where the long tips 30 are to be mounted, tips in which the radial clearance angle R1 is 1° and the setting line length L1 is 2 mm, 4 mm, 8 mm, or 12 mm were mounted. The undulation amount of the cut surface of the workpiece W at each feeding speed F was measured, and the measurement results are shown in FIG. 9.

Next, the above relationship when the radial clearance angle R1 is 0.5° will be described. When the tip side surface deflection width A was 0.3 mm, tips, in which the radial clearance angle R2 is 0.5° and the setting line length L2 is 1 mm, were mounted as the short tips 40. Also at the positions where the long tips 30 are to be mounted, the same tips as the short tips 40, in which the radial clearance angle R1 is 0.5° and the setting line length L1 is 1 mm, were mounted. And, the undulation amount of the cut surface of the workpiece W at each feeding speed F was measured. Next, at the positions where the long tips 30 are to be mounted, tips, in which the radial clearance angle R1 is 0.5° and the setting line length L1 is 2 mm, 4 mm, 8 mm or 12 mm were mounted. The undulation amount of the cut surface of the workpiece W at each feeding speed F was measured, and the measurement results are shown in FIG. 10.

It can be seen from FIGS. 9 and 10, that, in the tipped saw blades having 1 mm or 2 mm of the setting line length L1, the undulation amount of the cut surface of the workpiece W is markedly large when the feeding speed F of the workpiece W is less than 20 m/min. It can be seen that also when the feeding speed F is close to 20 m/min, the undulation amount is large. The feeding speed F of the workpiece W adopted in the machining may be 20 m/min or more. Thus, it is not desirable to use, as the long tips 30, tips in which the setting line length L1 is 1 mm or 2 mm.

It can be seen from FIG. 9, that, when the setting line length L1 is 4 mm and the radial clearance angle R1 is 1°, the undulation amount of the cut surface of the workpiece W abruptly increases when the feeding speed F of the workpiece W is close to 30 m/min. For example, the undulation amount is 0.08 mm or more. It can be seen from FIG. 10 that, when the setting line length L1 is 4 mm, and the radial clearance angle R1 is 0.5°, the undulation amount of the cut surface of the workpiece W abruptly increases when the feeding speed F of the workpiece W is close to 25 m/min. For example, the undulation amount is 0.04 mm or more.

The adopted feeding speed F of the workpiece W is 20 m/min or more. Thus, it has been found out that it is desirable to use tips in which the setting line length L1 is 4 mm or more as the long tips 30. Comparison of a tip in which the radial clearance angle R1 is 0.5° with a tip in which the radial clearance angle R1 is 1° showed that the undulation amount of the cut surface of the workpiece W is relatively reduced when the tip in which the radial clearance angle R1 is 0.5° is used.

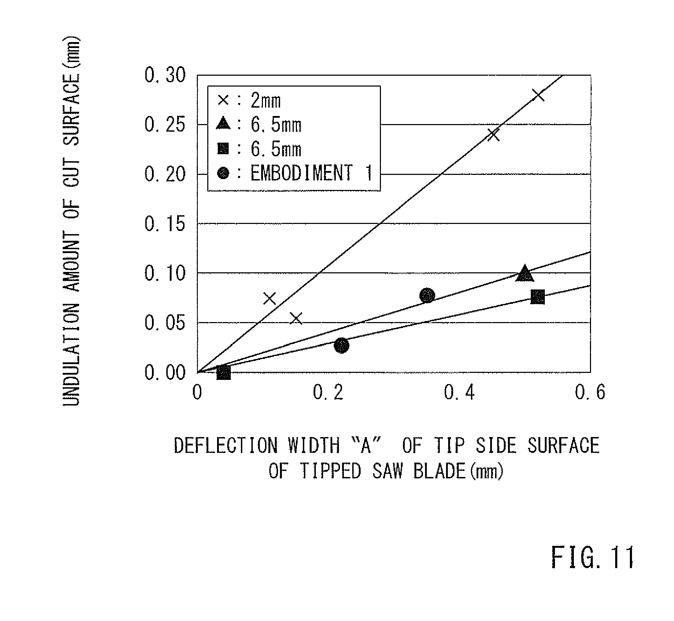

FIG. 11 shows the relationship between the tip side surface deflection width A and the undulation amount of the cut surface of the workpiece W when machining is performed on the workpiece by using the tipped saw blade 10. Although omitted in FIG. 7, the workpiece W is, for example, a melamine-attached MDF. A melamine-attached MDF integrally has an MDF, which is a base material, and a melamine-impregnated sheet heat-pressed to the surface of the MDF. As a wood board, an MDF is formed by mixing wood chips with adhesive and performing heat-pressure molding thereon. Two melamine-attached MDFs each having a thickness of 15 mm are superimposed one on the other, resulting in a thickness of 30 mm.

In embodiment 1, the outer diameter D1 of the tipped saw blade 10 is 400 mm, the thickness U1 of the base metal 12 is 3.2 mm, the hole diameter D2 is 75 mm, and the number of tooth mounting portions 20 is 72. The tipped saw blade 10 of embodiment 1 has six long tips 30. The thickness T1 of the long tips 30 is 4.4 mm, the setting line length L1 is 8 mm, and the radial clearance angle R1 is 1°. The log tips 30 are arranged at equal center angle intervals, with the center angle being 60°. The tipped saw blade 10 of embodiment 1 has 66 short tips 40. The short tips 40 exhibit a thickness T2 of 4.4 mm, a setting line length L2 of 2 mm, and a radial clearance angle R2 of 1°.

The diameter of the flange 103 of the machining apparatus is 120 mm, the RPM N of the tipped saw blade 10 is 3600, and the feeding speed F of the workpiece W is 39 m/min. Measurement was performed while the tip side surface deflection width A of the tipped saw blade 10 is set to 0.22 mm and 0.35 mm. The measurement values are indicated by solid circles in FIG. 11. As shown in FIG. 11, when the tip side surface deflection width A is 0.22 mm, the undulation amount of the cut surface of the workpiece W was approximately 0.03 mm. When the tip side surface deflection width A is 0.35 mm, the undulation amount of the cut surface of the workpiece W was approximately 0.08 mm.

Measurement was also performed on comparative examples 1 through 7. Comparative examples 1 through 4 have 72 tips that are the same. The tips have a setting line length of 2 mm, and a radial clearance angle of 1°. The tip side surface deflection width A of the tipped saw blade was set to 0.10 mm, 0.15 mm, 0.45 mm or 0.52 mm. The other conditions are the same as those of embodiment 1. The measurement results of comparative examples 1 through 4 are indicated by crosses in FIG. 11. As shown in FIG. 11, the respective undulation amounts of comparative examples 1 through 4 were approximately 0.08 mm, approximately 0.06 mm, approximately 0.24 mm, and approximately 0.28 mm. The relationship between the tip side surface deflection width A and the undulation amount of the cut surface of the workpiece W is indicated by an approximation line.

Comparative example 5 has 72 tips that are the same. The setting line length of the tips is 6.5 mm, and the radial clearance angle thereof is 1°. The tip side surface deflection width A of the tipped saw blade was set to 0.50 mm, and the other conditions were the same as those of embodiment 1. In FIG. 11, the measurement result of comparative example 5 is indicated by the solid triangle. The undulation amount of comparative example 5 was approximately 0.10 mm. The relationship between the tip side surface deflection width A and the undulation amount is indicated by an approximation line.

Comparative examples 6 and 7 have 72 tips that are the same. The setting line length of the tips is 6.5 mm, and the radial clearance angle thereof is 40'. The tip side surface deflection width A of the tipped saw blade was set to 0.04 or 0.52, and the other conditions were the same as those of embodiment 1. The measurement results of comparative examples 6 and 7 are indicated by solid squares in FIG. 11. The respective undulation amounts of comparative examples 6 and 7 were approximately 0.01 mm, and approximately 0.08 mm. The relationship between the tip side surface deflection width A and the undulation amount is indicated by an approximation line.

In comparative examples 1 through 4 indicated by crosses in FIG. 11, all the tips are short tips 40 in which the setting line length is 2 mm. It has been found out that, in this case, as the tip side surface deflection width A increases due to the deflection of the rotation shaft 100 and of the flange contact surface 105, the undulation amount of the cut surface of the workpiece W increases.

In comparative examples 5 through 7 indicated by the solid triangle and the solid squares, the setting line length of all the tips is 6.5 mm, which is not less than 4 mm. It has been found out that, in this case, even when the tip side surface deflection width A increases as a result of the deflection of the rotation shaft 100 and of the flange contact surface 105, the undulation amount of the cut surface of the workpiece W is smaller as compared with comparative examples 1 through 4 indicated by the crosses. However, in comparative examples 5 through 7, it is not easy to form the tipped saw blade at low cost.

Embodiment 1 indicated by the solid circles in FIG. 11 has six long tips 30. The number of the long tips 30 is within the range of 2 to 15% of all the tips whose number is seventy two. It has been found out that, in this case also, the undulation amount of the cut surface of the workpiece W is substantially the same as that of comparative examples 5 through 7 indicated by the solid triangle and the solid squares. Thus, it has been found out that, even when the number of the long tips 30 is only 2 to 15% of all the tips, it is possible to achieve such an effect as could not be expected by those skilled in the art, that is, the same effect when all the tips are long tips 30. Thus, the tipped saw blade 10 can sufficiently diminish the undulation amount of the cut surface of the workpiece W and can be formed at low cost.

As described above, even in the case where deflection is generated in the rotation shaft 100 and the flange contact surface 105, the tipped saw blade 10 can sufficiently diminish the undulation amount of the cut surface of the workpiece W. Furthermore, the tipped saw blade 10 can be formed at low cost. The long tips 30 and the short tips 40 are formed of an expensive materials such as polycrystalline diamond. Thus, when compared with the short tip 40, the long tip 30 is very expensive. However, the number of the long tips 30 is as small as 2 to 15% of all the tips. Thus, the tipped saw blade 10 can be formed at low cost. Further, since the number of short tips 40 is high, the side surface area of all the tips is small. As a result, the polishing time for polishing the tips is shortened.

While the embodiments of invention have been described with reference to specific configurations, it will be apparent to those skilled in the art that many alternatives, modifications and variations may be made without departing from the scope of the present invention. Accordingly, embodiments of the present invention are intended to embrace all such alternatives, modifications and variations that may fall within the spirit and scope of the appended claims. Embodiments of the present invention should not be limited to the representative configurations, but may be modified, for example, as described below.

A face bevel angle may be provided at the outer peripheral cutting edge 39 of the long tip 30 and/or the outer peripheral cutting edge 49 of the short tip 40. By providing a face bevel angle, it is possible to finish the cut surface neatly. In particular, this is suitable when the tip side surface deflection width A attributable to the deflection of the rotation shaft 100 and of the flange contact surface 105 is large.

Tangential clearance angles may be provided at the outer peripheral cutting edge 39 of the long tip 30 and/or the outer peripheral cutting edge 49 of the short tip 40. By providing tangential clearance angles, it is possible to finish the cut surface neatly.

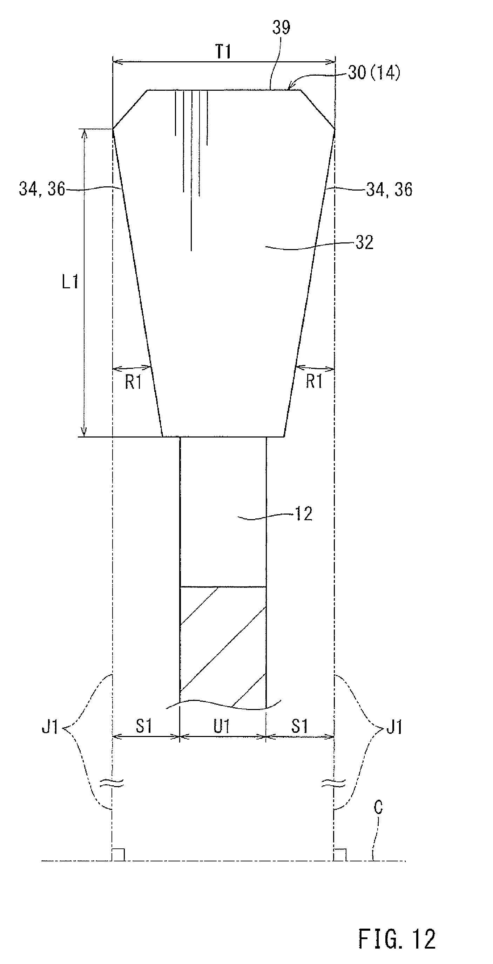

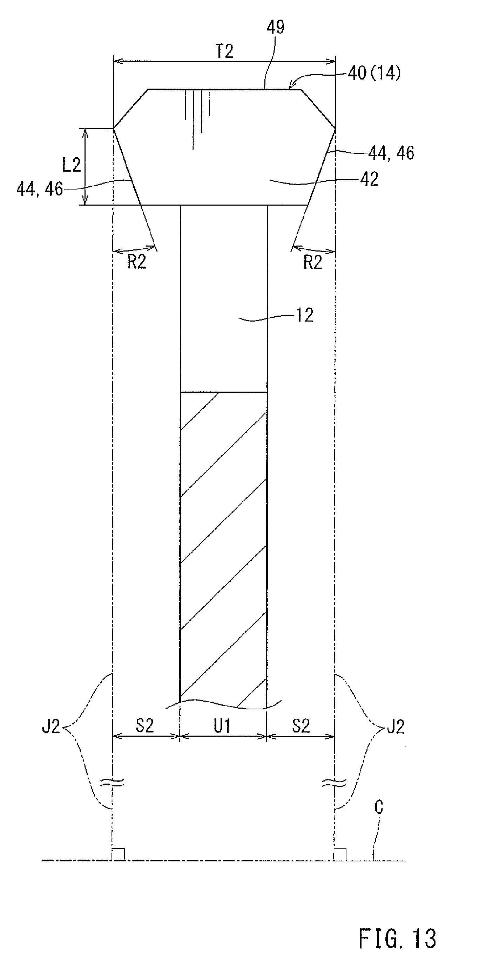

As shown in FIG. 12, chamfers may be provided at both ends of the outer peripheral cutting edge 39 of the long tip 30. As shown in FIG. 13, chambers may be provided at both ends of the outer peripheral cutting edge 49 of the short tip 40.

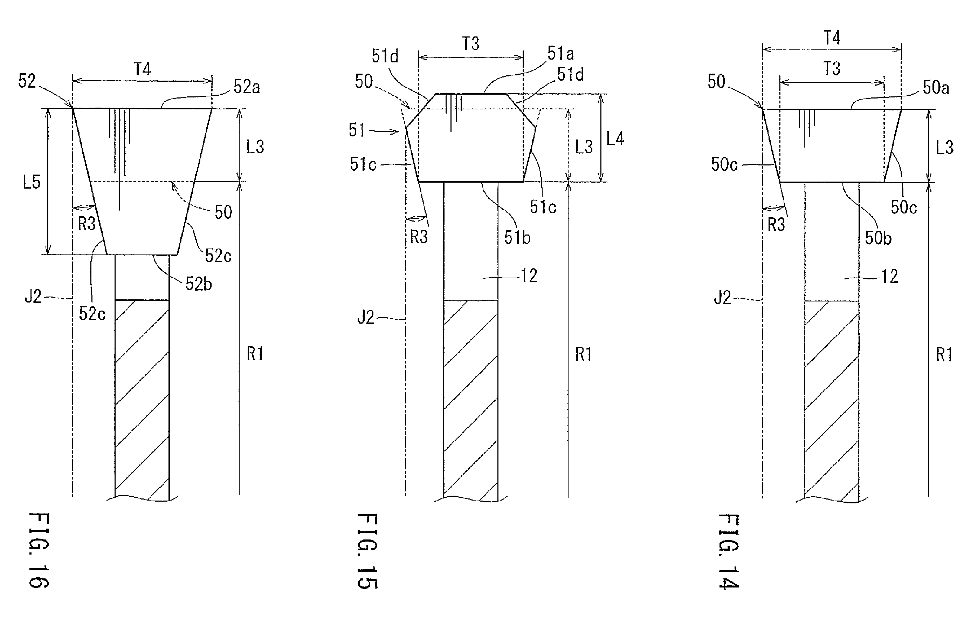

The tipped saw blade 10 may have first and second short tips 50 and 51 shown in FIGS. 14 and 15 and a long tip 52 shown in FIG. 16. The first short tip 50 is formed in the same way as the short tip 40 shown in FIG. 6. The cutting surface of the short tip 50 has a lower side 50b of a length T3, an upper side 50a of a length T4, and a setting line length L3. The lower side 50b is set at a distance of R1 from the center of the base metal 12. The short tips 50 and 51 and the long tip 52 have the same radial clearance angle R3.

Similar to the short tip 40 shown in FIG. 13, the second short tip 51 shown in FIG. 15 has chamfers 51d at both ends. The cutting surface of the second short tip 51 has an upper side 51a and a lower side 51b. The lower side 51b has the same length T3 as the lower side 50b of the short tip 50 shown in FIG. 14. Like the lower side 50b, the lower side 51b is set at the distance of R1 from the center of the base metal 12. The upper side 51a of the second short tip 51 is situated on the outer side in the radial direction of the upper side 50a of the firs short tip 50 (L4 > L3).

The long tip 52 shown in FIG. 16 is formed in a similar manner as the long tip 30 shown in FIG. 4. The cutting surface of the long tip 52 has an upper side 52a, a lower side 52b and a setting line length L5 (L5 > L4 > L3). The upper surface 52a has the same length T4 as the upper surface 50a of the first short tip 50. Similar to the upper side 50a of the first short tip 50, the upper side 52a of the long tip 52 is set at the distance of R1 + L3 from the center of the base metal 12.

Basically, the first short tips 50 and the second short tips 51 are arranged alternately. The long tips 52 of FIG. 16 are arranged between several second short tips 51 instead of the first short tips 50. Alternatively, the long tips 52 of FIG. 16 are arranged between some first short tips 50 instead of the second short tips 51 of FIG. 15. Alternatively, a plurality of first short tips 50 and a plurality of second short tips 51 may be alternately arranged, and several long tips 52 may be provided at predetermined places.

As shown in FIG. 7, the workpiece W may be machined through so-called down-cut by the tipped saw blade 10. Alternatively, the mounting orientation of the tipped saw blade 10 may be reversed with respect to the rotation shaft 100. The rotational direction Fn of the tipped saw blade 10 may be reversed. In this way, the workpiece W may be machined through so-called up-cut by the tipped saw blade 10.

## Claims

1. A tipped saw blade comprising:
a base metal; and
a plurality of tips attached on an outer periphery of the base metal;
wherein the plurality of tips include long tips with a setting line length in a radial direction of 4 mm or more, and short tips with a setting line length in the radial direction of less than 4 mm, and
wherein a number of the long tips is 2 to 15% of sum total of numbers of the long and short tips, and is two or more.

2. The tipped saw blade of claim 1, wherein a radial clearance angle of the long tip relative to a radial line in the thickness direction rages from 0° to 1.0°.

3. The tipped saw blade of claim 1 or 2, wherein a setting line length of all of the short tips ranges from 1 to 2 mm.
